(19)

Europäisches
Patentamt
European
Patent Office
Office européen
des brevets

(11)  **EP 2 402 715 A2**

(12) **EUROPEAN PATENT APPLICATION**

(43) Date of publication:
  **04.01.2012  Bulletin 2012/01**

(51) Int Cl.:
  **G01C 22/00** *(2006.01)*

(21) Application number: **11170019.1**

(22) Date of filing: **15.06.2011**

(84) Designated Contracting States:
  **AL AT BE BG CH CY CZ DE DK EE ES FI FR GB
  GR HR HU IE IS IT LI LT LU LV MC MK MT NL NO
  PL PT RO RS SE SI SK SM TR**
  Designated Extension States:
  **BA ME**

(30) Priority: **30.06.2010  KR 20100062557**

(71) Applicants:
  • **Samsung Electronics Co., Ltd.
    Yeoungtong-gu
    Suwon-si, Gyeonggi-do (KR)**
  • **SNU R&DB Foundation
    Seoul (KR)**

(72) Inventors:
  • **Jung, Yung-Keun
    Gyeonggi-do (KR)**

  • **Hong, Hyun-Su
    Gyeonggi-do (KR)**
  • **Lee, Jae-Myeon
    Gyeonggi-do (KR)**
  • **Park, Chan-Gook
    Seoul (KR)**
  • **Lee, Min-Su
    Seoul (KR)**
  • **Shin, Seung-Hyuck
    Seoul (KR)**

(74) Representative: **Jenkins, Richard Gavin
    Harrison Goddard Foote
    Saviour House
    9 St Saviourgate
    York, YO1 8NQ (GB)**

(54)  **Apparatus and method for estimating walking status for step length estimation using portable terminal**

(57)  Walking status estimation in a portable terminal includes a method for estimating walking status. The method includes setting an observation using an estimated temporary step length, an acceleration variance, and a step frequency. The method also includes generating an observed probability vector comprising probabilities per walking status according to the observation. The method further includes determining final probabilities per walking status by multiplying the observed probability vector by at least one of an initial probability matrix and one or more status transition probability vectors. The method still further includes determining a walking status having the greatest final probability as a final walking status.

FIG.5

**Description**

**CROSS-REFERENCE TO RELATED APPLICATION(S) AND CLAIM OF**

**PRIORITY**

The present application is related to and claims the benefit under 35 U.S.C. § 119(a) to a Korean patent application filed in the Korean Intellectual Property Office on June 30, 2010, and assigned Serial No. 10-2010-006257, the entire disclosure of which is hereby incorporated by reference.

**TECHNICAL FIELD OF THE INVENTION**

The present invention relates generally to a portable terminal. More particularly, the present invention relates to an apparatus and a method for estimating walking status in step length estimation using the portable terminal.

**BACKGROUND OF THE INVENTION**

Recently, the supply of portable terminals is increasing and user demand for various functions is also increasing. In this regard, portable terminals that include a pedestrian navigation function are under development.

When a user is outdoors, the pedestrian navigation function can estimate a location using signals by means of a Global Positioning System (GPS). However, when the user is indoors, the location estimation using the signal is difficult because of poor signal reception. To address this, techniques for determining the location of the portable terminal by estimating a step length and a direction change using the portable terminal are being researched.

To estimate a travel distance of the portable terminal carried by the user, current techniques calculate the distance based on the number of measured steps by consistently considering a distance for one step length; that is, by applying a constant step length estimation parameter. In other words, the constant step length estimation parameter is applied regardless of the walking status of the user. Disadvantageously, error can grow according to the walking status of the pedestrian. Further, as the total time of the step length estimation is increased, the error is accumulated. As a result, estimation during long-distance walking is subject to an increasing error in the final travel distance.

**SUMMARY OF THE INVENTION**

To address the above-discussed deficiencies of the prior art, it is a primary aspect of the present invention to provide an apparatus and a method for enhancing accuracy of step length estimation in a portable terminal.

Another aspect of the present invention is to provide an apparatus and a method for estimating a walking status to estimate an accurate step length in a portable terminal.

Yet another aspect of the present invention is to provide an apparatus and a method for estimating a walking status using a Hidden Markov Model (HMM) in a portable terminal.

According to one aspect of the present invention, a method for estimating a walking status in a portable terminal includes setting an observation using an estimated temporary step length, an acceleration variance, and a step frequency. The method also includes generating an observed probability vector including probabilities per walking status according to the observation. The method further includes determining final probabilities per walking status by multiplying the observed probability vector by at least one of an initial probability matrix and one or more status transition probability vectors. The method still further includes determining a walking status of the greatest final probability as a final walking status.

According to another aspect of the present invention, an apparatus of a portable terminal includes an acceleration sensor configured to measure an acceleration according to a movement of the portable terminal, and a controller. The controller is configured to set an observation using an estimated temporary step length, an acceleration variance, and a step frequency. The controller is also configured to generate an observed probability vector including probabilities per walking status according to the observation. The controller is further configured to determine final probabilities per walking status by multiplying the observed probability vector by at least one of an initial probability matrix and one or more status transition probability vectors. The controller is still further configured to determine a walking status having the greatest final probability as a final walking status.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

**BRIEF DESCRIPTION OF THE DRAWINGS**

For a more complete understanding of the present disclosure and its advantages, reference is now made to the following description taken in conjunction with the accompanying drawings, in which like reference numerals represent like parts:

FIGURES 1A and 1B illustrate linearity of a step frequency and an acceleration variance according to a step length;

FIGURES 2A and 2B illustrate characteristics of the step length and the step frequency according to walking status, and characteristics of the step length and the acceleration variance according to the walking status;

FIGURE 3 illustrates experiment results of a walking status, a run status, and the walk status in sequence based on a straight-line distance travel;

FIGURE 4 illustrates status transitions of the walking status;

FIGURE 5 illustrates operations of a portable terminal according to an embodiment of the present invention; and

FIGURE 6 illustrates the portable terminal according to an embodiment of the present invention.

Throughout the drawings, like reference numerals will be understood to refer to like parts, components and structures.

**DETAILED DESCRIPTION OF THE INVENTION**

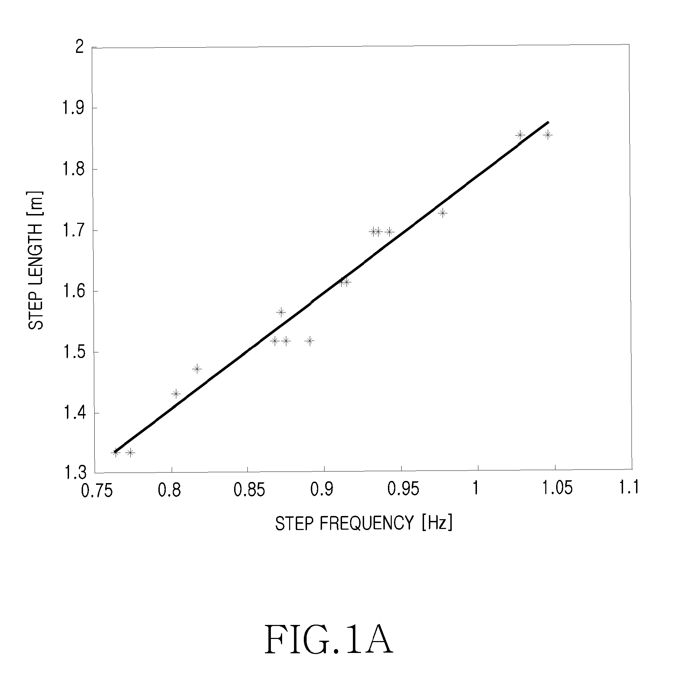

FIGURES 1A through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communications system.

Exemplary embodiments of the present invention provide a technique for estimating walking status to estimate an accurate step length in a portable terminal. Hereinafter, the term portable terminal encompasses cellular phones, Personal Communication Systems (PCSs), Personal Digital Assistants (PDAs), International Mobil Telecommunication (IMT)-200 terminals, smart phones, and the like. The term portable terminal also encompasses apparatuses that include a step length estimation function and exclude a communication function.

Typically, the step length has linearity in proportion to a step frequency and an acceleration variance. Based on the linearity, a Pedestrian Dead Reckoning (PDR) can estimate a travel distance to calculate a pedestrian's location.

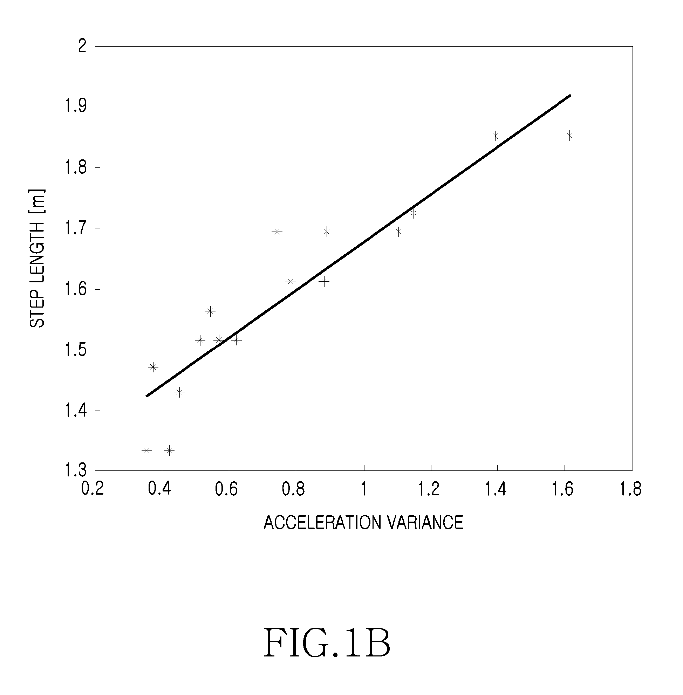

FIGURE 1A depicts linearity of the step length and the step frequency, and FIGURE 1B depicts linearity of the step length and the acceleration variance. As shown in FIGURES 1A and 1B, as the step length increases, the step frequency and the acceleration variance increase. A travel distance estimation method using the linearity of the step frequency and the acceleration variance for the step length ensures a step length estimation performance with quite high accuracy in the walking situation. However, when the linear estimation method is applied to a running situation, considerable errors occur. This is because the linearity of FIGURE 1A and FIGURE 1B does not reveal in the running. In other words, this implies that the step length estimation parameter differs in the walking situation and the running situation respectively. As a result, when the step length of the running situation is estimated using the step length estimation parameter of the walking situation, step length estimation errors take place. Hence, it is necessary to distinguish and recognize the running situation and the walking situation and apply an adequate step length estimation parameter according to the respective walking statuses.

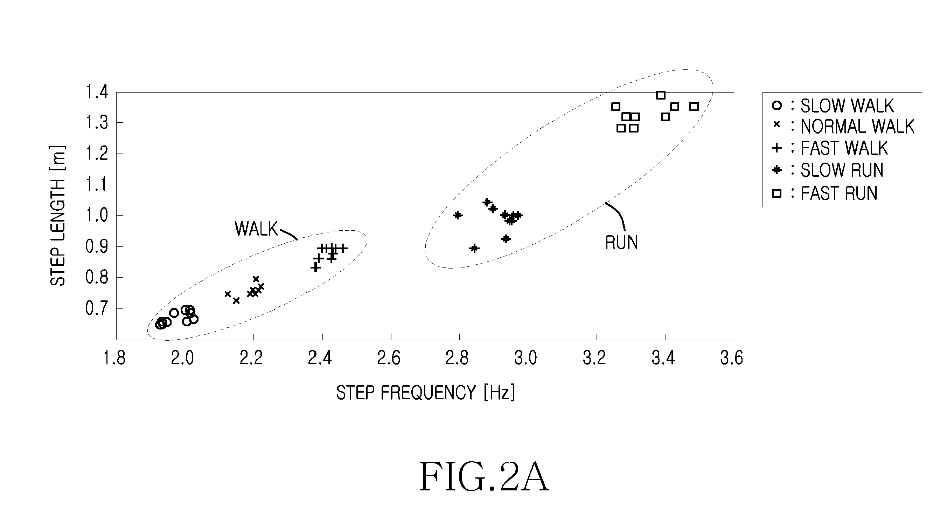

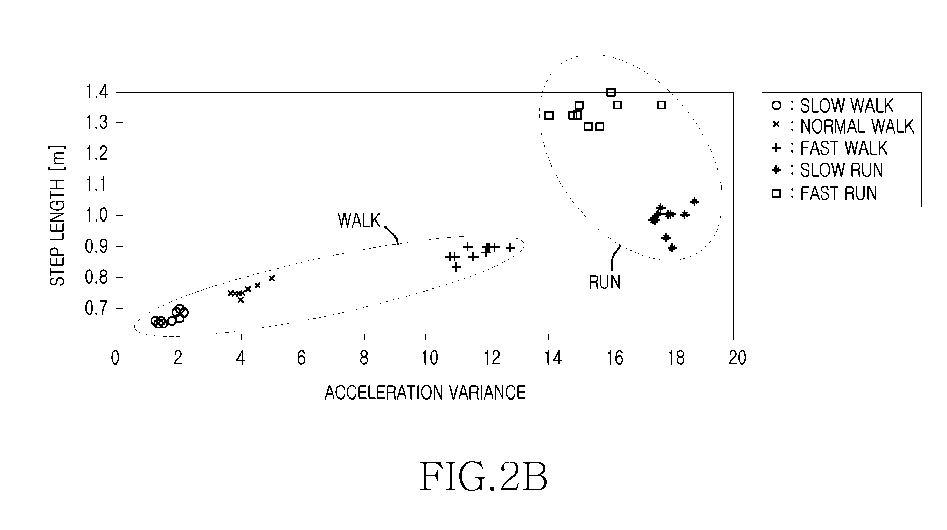

FIGURE 2A depicts characteristics of the step length and the step frequency according to walking status, and FIGURE 2B depicts characteristics of the step length and the acceleration variance according to the walking status. Referring to FIGURES 2A and 2B, even in the run status, the relation of the step length and the step frequency has linearity. However, as for the relation of the step length and the acceleration variance in the run status, as the acceleration variance value is smaller, the step length increases.

To design a walking status recognition algorithm, the present invention adopts the Hidden Markov Model (HMM). The HMM, which is one of the Markov models with hidden statuses, estimates a current status merely using an observation, a status transition probability, and a conditional probability. The Markov model is a random processor for determining a future process based only on the current status, that is, completely independent of the past status. The Markov model is called a memory-less process because it does not remember the past status, and is a finite state machine which changes the status every time. The Markov models are divided into the Markov Model (MM) and the HMM. The MM can know which status it passes and thus can acquire the order of the states or a decision function. The HMM does not know the passing state and can know merely a probability function. Accordingly, since only its output value is observed and the flow of the states is not observed, it is called the HMM.

Given an observation $O_i$ and a model $\lambda = (A, B, \pi)$ for the HMM, the present invention calculates the greatest probability $P(s_i|o_i)$ of generating the current observation $o_i$ from the status $s_i$, and selects the status of the greatest probability.

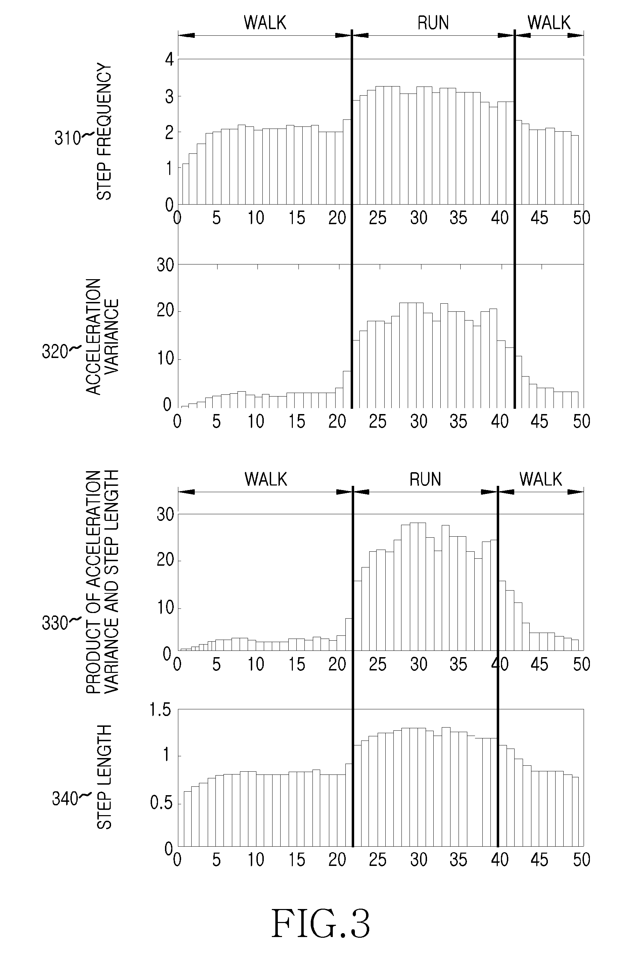

To utilize the HMM, an observation for the HMM should be defined. The present invention calculates the walking step length using the acceleration variance, the step frequency, and an integrated parameter of experiment data and thus obtains their relations. FIGURE 3 depicts experiment results of a walk status, a run status, and a walk status in order based on travel along a 50m straight-line distance. FIGURE 3 shows the step frequency 310, the acceleration variance 320, a product 330 of the acceleration variance and the step length, and the step length 340 according to the status transition. The product 330 of the acceleration variance and the step length is used to represent the changes of the acceleration variance and the walking step length more clearly. Referring to FIGURE 3, on the whole, the step length of the walk status is smaller than 1m, and the step length of the run status is greater than 1m. Thus, the change of the acceleration variance is exhibited more obviously through the product 330 of the acceleration variance and the step length. When the step frequency 310, the acceleration variance 320, the product 330 of the acceleration variance and the step length, and the step length 340 are greater than thresholds, the probability of the run status is great. The present invention defines the step frequency 310, the acceleration variance 320, the product 330 of the acceleration variance and the step length, and the step length 340 as the observation for the HMM.

While the walking status may be determined merely using the observation of the corresponding step, the present invention can take account of the probability of the walking status using a certain number of previous steps for a more precise determination. For example, the present invention can calculate the probability of the current walking status by multiplying the probabilities of the walking status of the two previous steps by the probability of the current walking status. That is, when both of the two previous steps are associated with walking, the probability of actually being the walking status is greater, even though the current observation exceeds the threshold and indicates the run status. In various implementations, the walking status of three or more previous steps can be considered.

The HMM is one statistical model for determining the hidden status from the observed status by assuming that the modeled system is the Markov model of the unknown status. That is, since the status is not directly visible, the status is statistically determined only through an observer. For doing so, it is necessary to define a status transition probability between the statuses and a status conditional probability using the observation. The status conditional probability can be given by Equation 1.

$$P\big(s_i\big|o_i\big) = \frac{P\big(o_i\big|s_i\big)P\big(s_i\big)}{P\big(o_i\big)}, \ i = 1,2,3\cdots,n \qquad \text{[Eqn. 1]}$$

In Equation 1, $P(s_i|o_i)$ denotes, as the status conditional probability, the probability of the status $s_i$ when the observation is $o_i$, $P(o_i|s_i)$ denotes the probability of observing $o_i$ when the status is $s_i$, $P(s_i)$ denotes the probability of generating the status $s_i$, and $P(o_i)$ denotes the probability of generating the observation $o_i$.

According to Equation 1, the status conditional probability has the relation of Equation 2.

$$P\big(s_i\big|o_i\big) \propto L\big(s_i\big|o_i\big) = P\big(o_i\big|s_i\big)P\big(s_i\big), \ i = 1,2,3,\cdots,n \qquad \text{[Eqn. 2]}$$

In Equation 2, $P(s_i|o_i)$ denotes, as the status conditional probability, the probability of the status $s_i$ when the observation is $o_i$, $L(s_i|o_i)$ denotes a likelihood probability, $P(o_i|s_i)$ denotes the probability of observing $o_i$ when the status is $s_i$, and $P(s_i)$ denotes the probability of generating the status $s_i$.

The HMM can be modeled based on Equation 3.

$$\lambda = \big(A, B, \pi\big) \qquad \text{[Eqn. 3]}$$

In Equation 3, λ denotes the HMM, and *A*, *B,* and π are the probability parameters of the HMM. *A* denotes a status transition probability matrix, *B* denote an observed symbol probability distribution matrix, and π denotes an initial probability distribution matrix. More specifically, the probability parameters are given by Equation 4.

$$\pi_j = P[s_l = j] \qquad \qquad 1 \le j \le N$$
$$A_{ij} = P[s_t = j | s_{t-1} = j] \qquad 1 \le i, j \le N \qquad\qquad \text{[Eqn. 4]}$$
$$B_j(o_t) = P[o_t = o_k | s_t = j] \qquad 1 \le k \le M$$

In Equation 4, $\pi_j$ denotes the probability of the *status j* , $A_{ij}$ denotes the probability of the current status *j* when the previous status is *i*, and $B_j(o_t)$ denotes the probability of the observation $o_t$ when the status is *j*.

The probability parameters of the model in Equation 4 are determined through the experiment. That is, the probability parameter values are determined to optimize the performance of the walking status recognition by calculating a combination of the probability values using previous experiment data. For example, element values of the matrix *A* can be determined based on the walking pattern of normal people, specifically, based on the high probability that the first step is likely to be walking rather than running, the low probability that the walk status is transitioned to a mark-time status suddenly, and the low probability that the run status is transitioned to the mark-time status suddenly. Herein, the mark-time status denotes a status where a user remains stationary. As for the matrix *B*, it is important to minimize misjudgment caused by instantaneous data noise by setting the probability of the highest walking status in the corresponding observation and not extremely lowering the probabilities of the other walking status at the same time. Consequently, the probability parameters are constituted as shown in Table 1, Table 2, and Table 3, and their specific values are determined according to the experiment results.

Table 1

| π | Initial value |
|---|---|
| Mark-time | $\pi_1$ |
| Walk | $\pi_1$ |
| Run | $\pi_1$ |

Table 2

| A | Mark-time | Walk | Run |
|---|---|---|---|
| Mark-time | $S_{11}$ | $S_{12}$ | $S_{13}$ |
| Walk | $S_{21}$ | $S_{22}$ | $S_{23}$ |
| Run | $S_{31}$ | $S_{32}$ | $S_{33}$ |

Table 3

| B | Observation 1 | Observation 2 | Observation 3 |
|---|---|---|---|
| Mark-time | $O_{11}$ | $O_{12}$ | $O_{13}$ |
| Walk | $O_{21}$ | $O_{22}$ | $O_{23}$ |
| Run | $O_{31}$ | $O_{32}$ | $O_{33}$ |

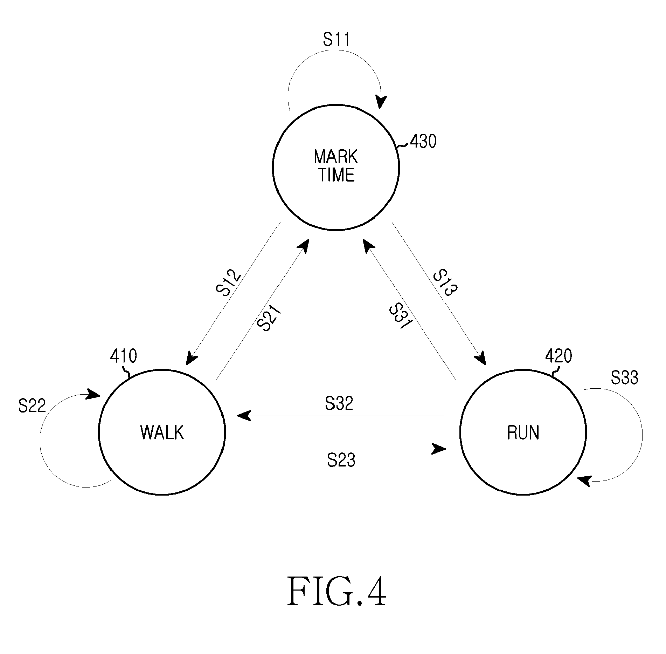

Table 1 shows the probabilities of the walking statuses when the first step commences, Table 2 shows the transition probabilities of the walking statuses where the vertical axis indicates the previous walking status and the horizontal axis indicates the current walking status, and Table 3 shows the probabilities of the walking statuses according to the observation. The status transitions indicated by the elements of Table 2 are shown in FIGURE 4. As shown in FIGURE 4, S11 indicates the probability of maintaining the mark-time status 430, S12 indicates the probability of transiting from the mark-time status 430 to the walk status 410, S13 indicates the probability of transiting from the mark-time status 430 to the run status 410, S21 indicates the probability of transiting from the walk status 410 to the mark-time status 430, S22 indicates the probability of maintaining the walk status 410, S23 indicates the probability of transiting from the walk status 410 to the run status 420, S31 indicates the probability of transiting from the run status 420 to the mark-time status 430, S32 indicates the probability of transiting from the run status 420 to the walk status 410, and S33 indicates the probability of maintaining the run status 420.

In the matrix $A$ of Table 2, each row is selectively used according to the previous walking status. For example, the first row is used when the previous walking status is a mark-time, the second row is used for a walk, and the third row is used for a run. As shown in Table 2, the status transition probability matrix includes probability values of status transitions as many as a square of the number of possible walking statuses, i.e., $3^2$. To ease the understanding, the row selected according to the previous walking status in the matrix $A$ is referred to as 'a status transition probability vector'.

In the matrix $B$ of Table 3, each column is selectively used according to the observation and selected based on the acceleration variance, the step frequency, and the step length. For example, when the observation exceeds a predefined threshold, the column corresponding to Observation 3 (great probability of a run) is used. When the acceleration variance is very small, the column corresponding to Observation 1 is used. When the acceleration variance is the intermediate value, the column corresponding to Observation 2 (great probability of a walk) is used. To ease the understanding, the column of the probability selected according to the observation in the matrix $B$ is referred to as 'an observed probability vector'.

To estimate the walking status, the present invention multiplies the probability of the current walking status from the walking status of the recent two steps by the walking status probability based on the observation and determines the status of the greatest probability as the current walking status, which shall be explained in more detail.

The portable terminal generates the $3 \times 1$ observed probability vector by extracting the column corresponding to the current observation of the matrix B. For example, when values indicating the Observation 1 are measured, the probability of the mark-time status is greatest and the portable terminal selects $[O_{11}\ O_{21}\ O_{31}]^T$ as the observed probability vector in the matrix $B$. The portable terminal generates the status transition probability vector by extracting the column corresponding to the previous walking status in the matrix $A$. For example, when the previous walking status is a walk, the portable terminal extracts $[S_{21}\ S_{22}\ S_{23}]$. By multiplying $[S_{21}\ S_{22}\ S_{23}]$ by $[O_{11}\ O_{21}\ O_{31}]^T$, the portable terminal determines the probability $[S_{21}O_{11}\ S_{22}O_{21}\ S_{23}O_{31}]$ of each walking status. If the current step is the first step and the previous walking status is absent, the matrix $\pi$ is used in place of the matrix $B$. When the current step exceeds the third step, two previous walking statuses are present. To reflect the status transition probability of the two previous walking statuses, the portable terminal generates two status transition probability vectors from the matrix $A$ and multiples the observed probability vector by the two status transition probability vectors.

Now, operations and structure of the portable terminal for estimating the walking status as stated above are described in detail by referring to the drawings.

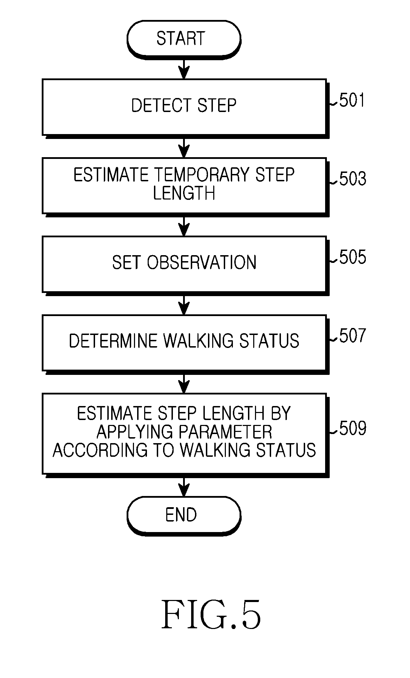

FIGURE 5 illustrates operations of the portable terminal according to an embodiment of the present invention.

In step 501, the portable terminal detects the step using a measurement value of an acceleration sensor. For example, to detect the step, the portable terminal can employ peak value detection, specific interval detection, zero-cross point detection, and the like. Using the zero-cross point detection, the portable terminal processes a raw signal of the accelerometer using sliding window summing and signal difference, and then recognizes the point of the signal crossing the zero value as the step. Thus, the portable terminal can obtain the step frequency.

In step 503, the portable terminal estimates a temporary step length using the integrated parameter. Since the correlation of the step length, the acceleration variance, and the step frequency is linear, the ratio value of the linearity is used as the integrated parameter. That is, a normal walk regularly increases the acceleration variance and the step frequency according to the pace, whereas the linearity of a running differs. Accordingly, it is advantageous to distinguish the running and to apply a separate running parameter. However, the linear ratio value can be calculated using every step data without distinction of the running, which is referred to as the integrated parameter. In other words, the integrated parameter can be a temporary reference value for calculating the approximate acceleration variance and step frequency to distinguish the running.

In step 505, the portable terminal sets the observation. Herein, the setting of the observation means how the current walking status is represented through the measured information. The setting of the observation is selected using the step frequency determined in step 501 and the temporary step length estimated in step 503. More specifically, when the step length determined using the integrated parameter, the step frequency, and the acceleration variance fall below a walk threshold, the observation is set to a halt. When the step length, step frequency, and acceleration variance exceed the walk threshold but fall below a run threshold, the observation is set to a walk. When all of the parameters exceed the run threshold, the observation is set to a running.

In step 507, the portable terminal determines the walking status. The portable terminal calculates a final probability for each walking status using at least one of the observation, an initial status probability, and the status transition probability, and determines the walking status having the greatest final probability as the final walking status. In so doing, details of the determination can vary depending on the number of the previous steps. As for the first step, the portable terminal calculates the final probabilities of the walking statuses by multiplying the observed probability vector corresponding to the observation by the initial status probability matrix. For example, the initial status probability matrix is shown in Table 1. As for the second step, the portable terminal extracts the status transition probability vector corresponding to the walking status of the previous step from the status transition probability matrix, and then calculates the final probabilities of the walking statuses by multiplying the observed probability vector corresponding to the observation by the status transition probability vector. For a step beyond the third step, the portable terminal extracts the status transition probability vectors corresponding to the walking status of the two previous steps from the status transition probability matrix, and then calculates the final probabilities of the walking statuses by sequentially multiplying the observed probability vector by the status transition probability vectors. Next, the portable terminal determines the walking status corresponding to the greatest probability as the final walking status. The final probabilities as above can be expressed as Equation 5.

$$\text{1st walk} : \pi^T B_{(observe)}$$
$$\text{2nd walk} : A_{(t-1)} B_{(observe)} \qquad \text{[Eqn. 5]}$$
$$\text{others} : A_{(t-2)} A_{(t-1)} B_{(observe)}$$

In Equation 5, $\pi$ denotes the initial probability matrix, $B_{(observe)}$ denotes the selected observation, and $A_{(t)}$ denotes the row corresponding to the walking status of the t-th step in the status transition probability matrix.

In step 509, the portable terminal estimates the step length using the parameters according to the walking status. The portable terminal stores the parameters corresponding to the walking status, and estimates the step length using the parameter optimized for the walking status. For instance, the parameters can be predefined or set by the portable terminal. In an area configured for receiving a Global Positioning System (GPS) signal, the portable terminal obtains the average number of the steps, the acceleration variance, and the step frequency according to the travel distance of the pedestrian through the GPS information, and proactively determines the relation parameter of the user's step length, acceleration variance, and step frequency using the obtained values.

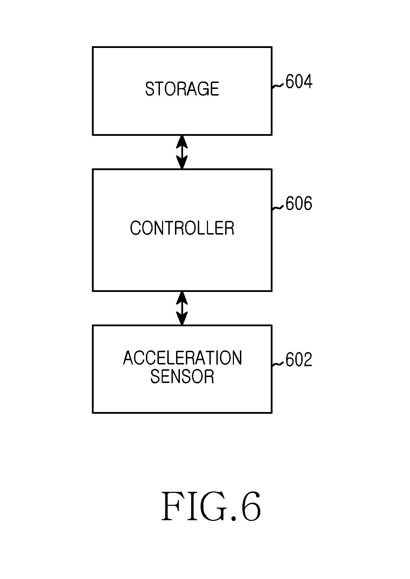

FIGURE 6 is a block diagram of the portable terminal according to an embodiment of the present invention.

As shown in FIGURE 6, the portable terminal includes an acceleration sensor 602, a storage 604, and a controller 606.

The acceleration sensor 602 measures the acceleration according to the movement of the portable terminal. The acceleration sensor 602 measures the magnitude of the acceleration using a physical displacement of its internal mechanical device, and outputs the magnitude of the acceleration as the frequency or the voltage. For example, the acceleration sensor 602 can be of one of an inertial type, a gyro type, and a silicon type.

The storage 604 stores a basic program for operating the portable terminal, application programs, and data such as user contents. The storage 604 provides the stored data according to a request of the controller 606. In particular, the storage 604 stores the status transition probability matrix, the observed symbol probability distribution matrix, and the initial probability distribution matrix for the walking status estimation, and the parameters per walking status for the step length estimation. For example, the status transition probability matrix can be constituted as shown in Table 2, the observed symbol probability distribution matrix can be constituted as shown in Table 3, and the initial probability distribution matrix can be constituted as shown in Table 1. As shown in Table 2, the status transition probability matrix includes probability values of status transitions as many as a square of the number of possible walking statuses, i.e., $3^2$.

The controller 606 controls the functions of the portable terminal. For example, the controller 606 controls to estimate the user's step length. In particular, the controller 606 controls to determine the walking status in the step length estimation. The walking status determination function is now explained in more detail.

The controller 606 detects the step using the measurement value of the acceleration sensor 602 and estimates the temporary step length using the integrated parameter. Next, the controller 606 sets the observation and determines the walking status. That is, the controller 606 calculates the final probability for each walking status using at least one of the observation, the initial status probability, and the status transition probability, and determines the walking status having the greatest final probability as the final walking status. In so doing, the details of the determination can vary depending on the number of the previous steps. As for the first step, the controller 606 calculates the final probabilities of the walking statuses by multiplying the observed probability vector corresponding to the observation by the initial status probability matrix. As for the second step, the controller 606 extracts the status transition probability vector corresponding to the walking status of the previous step from the status transition probability matrix, and then calculates the final probabilities of the walking statuses by multiplying the observed probability vector corresponding to the observation by the status transition probability vector. For a step beyond the third step, the controller 606 extracts the status transition probability vectors corresponding to the walking status of the two previous steps from the status transition probability matrix, and then calculates the final probabilities of the walking statuses by sequentially multiplying the observed probability vector by the status transition probability vectors. Next, the controller 606 determines the walking status corresponding to the greatest probability as the final walking status.

As set forth above, the portable terminal estimates the current walking status using the walking status probability using the observation, the status transition probability from the previous walking status, and the initial status probability. Therefore, the step length estimation can apply the parameters optimized for the walking status.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for estimating a walking status, the method comprising:

   setting an observation using an estimated temporary step length (340), an acceleration variance (320), and a step frequency (310);
   generating an observed probability vector comprising probabilities per walking status according to the observation;
   determining final probabilities per walking status by multiplying the observed probability vector by at least one of an initial probability matrix and one or more status transition probability vectors; and
   determining a walking status having a greatest final probability as a final walking status.

2. The method of claim 1, further comprising:

   estimating the temporary step length (340) using an integrated parameter,
   wherein the integrated parameter comprises a step length (340) determined without distinction of the walking status and a step frequency (310) or a ratio value of the step length (340) and the acceleration variance (320).

3. The method of claim 1, further comprising:

   determining the acceleration variance (320) and the step frequency (310) using a measurement value of an acceleration sensor (602).

4. The method of claim 1, wherein the generating of the observed probability vector comprises:

   extracting a column corresponding to the observation from a predefined observed symbol probability distribution matrix.

5. The method of claim 1, wherein the determining of the final probabilities per walking status comprises:

   multiplying the initial probability matrix by the observed probability vector.

6. The method of claim 1, wherein the determining of the final probabilities per walking status comprises:

   generating at least one status transition probability vector by extracting at least one row corresponding to the walking status of at least one previous step from a pre-stored status transition probability matrix; and
   multiplying the at least one status transition probability vector by the observed probability vector.

7. An apparatus of a portable terminal, the apparatus comprising:

   an acceleration sensor (602) configured to measure an acceleration according to a movement of the portable terminal; and
   a controller (606) configured to:

set an observation using an estimated temporary step length (340), an acceleration variance (320), and a step frequency (310);
generate an observed probability vector comprising probabilities per walking status according to the observation;
determine final probabilities per walking status by multiplying the observed probability vector by at least one of an initial probability matrix and one or more status transition probability vectors; and
determine a walking status having the greatest final probability as a final walking status.

8. The apparatus of claim 7, wherein the controller (606) estimates the temporary step length (340) using an integrated parameter, and
the integrated parameter comprises a step length (340) determined without distinction of the walking status and a step frequency (310) or a ratio value of the step length (340) and the acceleration variance (320).

9. The apparatus of claim 7, wherein the controller (606) determines the acceleration variance (320) and the step frequency (310) using a measurement value of the acceleration sensor (602).

10. The apparatus of claim 7, wherein, to generate the observed probability vector, the controller (606) extracts a column corresponding to the observation from a predefined observed symbol probability distribution matrix.

11. The apparatus of claim 7, wherein, to determine the final probabilities per walking status, the controller (606) multiplies the initial probability matrix by the observed probability vector.

12. The apparatus of claim 7, wherein, to determine the final probabilities per walking status, the controller (606) generates at least one status transition probability vector by extracting at least one row corresponding to the walking status of at least one previous step from a pre-stored status transition probability matrix, and multiplies the at least one status transition probability vector by the observed probability vector.

13. The method of claim 4 or the apparatus of claim 9, wherein the observed symbol probability distribution matrix comprises probability values per walking status corresponding to possible observations respectively.

14. The method of claim 6 or the apparatus of claim 12, wherein the status transition probability matrix comprises probability values of status transitions as many as a square of the number of possible walking statuses.

15. The method of claim 1 or the apparatus of claim 7, wherein the walking statuses comprise a walk status (410), a run status (420), and a mark-time status (430).

FIG.1A

FIG.1B

FIG.2A

FIG.2B

EP 2 402 715 A2

FIG.3

FIG.4

START

DETECT STEP ~501

ESTIMATE TEMPORARY STEP LENGTH ~503

SET OBSERVATION ~505

DETERMINE WALKING STATUS ~507

ESTIMATE STEP LENGTH BY APPLYING PARAMETER ACCORDING TO WALKING STATUS ~509

END

# FIG.5

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 102010006257 KR